# FASCICULE DE BREVET EUROPEEN

(11) **EP 1 963 075 B1**
(45) Date de publication et mention de la délivrance du brevet: **18.02.2009**
(21) Numéro de dépôt: 06841945.6
(22) Date de dépôt: 15.12.2006
(51) Int. Cl.: B29C 49/12, B29C 49/56, F16H 53/08

(54) **DISPOSITIF DE COMMANDE PAR ORGANE SUIVEUR ET CHEMIN DE CAME D'UN ELEMENT DE MACHINE DE TRAITEMENT DE RECIPIENTS ET MACHINE DE TRAITEMENT DE RECIPIENTS COMPRENANT UN TEL DISPOSITIF**
EIN FOLGEGLIED UND EINE NOCKENBAHN EINSETZENDER STEUERVORRICHTUNG FÜR EIN MASCHINENELEMENT ZUR BEARBEITUNG VON BEHÄLTERN UND SOLCH EINE VORRICHTUNG UMFASSENDE BEHÄLTERBEARBEITUNGSMASCHINE
CONTROL DEVICE EMPLOYING A FOLLOWER MEMBER AND CAMTRACK FOR AN ELEMENT OF A MACHINE FOR PROCESSING CONTAINERS, AND CONTAINER PROCESSING MACHINE COMPRISING SUCH A DEVICE

(30) Priorité: 16.12.2005 FR 0512862
(43) Date de publication de la demande: 03.09.2008
(73) Titulaire: Sidel Participations, 76930 Octeville Sur Mer (FR)
(72) Inventeur: DEROUAULT, Philippe, 76930 Octeville-sur-Mer (FR); DANEL, Laurent, 76930 Octeville-sur-Mer (FR)
(74) Mandataire: Cabinet Plasseraud
(86) Numéro de dépôt international: PCT/FR2006/002742
(87) Numéro de publication internationale: WO 2007/080272

(56) Documents cités:
- EP-A- 0 537 023
- DE-A1- 10 110 668
- DE-A1- 10 246 685
- DE-U1- 20 006 524
- US-A- 5 528 879

## Description

La présente invention concerne d'une manière générale le domaine du traitement des récipients. Elle s'applique tout particulièrement, mais non exclusivement :
- à la fabrication de récipients en matériau thermoplastique, tels que par exemple le PET ou le PEN, en particulier par des processus de soufflage ou d'étirage-soufflage à partir d'une ébauche ;
- au remplissage de tous types de récipients.

L'invention concerne notamment les machines de traitement de type rotatif.

Ainsi, dans le cas des machines de soufflage ou d'étirage-soufflage, elle concerne plus particulièrement celles comportant plusieurs postes de soufflage montés à la périphérie d'un carrousel qui est entraîné de manière continue en rotation autour de son axe. Chaque poste de soufflage comporte notamment un moule de soufflage, un dispositif de soufflage et un dispositif d'étirage.

Dans le cas des machines de remplissage, elle concerne plus particulièrement celles comportant plusieurs postes de remplissage montés à la périphérie d'un carrousel qui est entraîné de manière continue en rotation autour de son axe. Chaque poste de remplissage comporte notamment une tête de remplissage sous laquelle on amène un récipient. Chaque poste de remplissage comporte des organes mobiles, tels que des clapets dans chaque tête, ou encore des organes permettant de déplacer les têtes relativement aux récipients (par exemple pour approcher le récipient de l'orifice de remplissage de la tête, ou le plaquer contre cet orifice)

### Définition de certains termes employés

Les définitions qui suivent ne sont données qu'à fin de clarté.

Ces définitions font référence au vocabulaire pratiqué habituellement dans les métiers impliqués par la présente invention.

Par PET, on désigne le poly(-éthylène téréphtalate), c'est-à-dire un polyester obtenu par exemple par polycondensation, à partir d'acide téréphtalique et d'éthylène glycol.

Par PEN, on désigne le poly(-éthylène naphtalate). C'est également un polyester.

Par ébauche, on désigne une préforme ou un récipient intermédiaire.

Une préforme est généralement un objet sensiblement tubulaire fermé à une extrémité axiale et dont l'ouverture présente la forme définitive du col du corps creux final, tel qu'une bouteille ou un flacon.

Par soufflage, on désigne un procédé dans lequel l'ébauche est placée dans un moule de finition contenant l'empreinte du récipient à obtenir, une tuyère de soufflage (ou nez de soufflage) étant introduite dans l'ouverture (le col) de cette ébauche, un fluide de soufflage sous haute pression plaquant la matière de l'ébauche contre les parois du moule. Le moule de finition est par exemple du type portefeuille, c'est-à-dire qu'il comporte deux parties s'ouvrant par écartement en pivotant autour d'un axe commun. Le fluide de soufflage est en général de l'air.

Par étirage soufflage est désigné un procédé dans lequel une tige d'élongation (appelée également canne) vient étirer la préforme dans le moule de soufflage, par appui contre la paroi de fond de la préforme. Un tel procédé est notamment mis en oeuvre pour le soufflage de préformes préalablement injectées, l'étirage (ou élongation) étant réalisé avant ou pendant le soufflage de la préforme. Lorsque l'étirage précède le soufflage, un présoufflage est généralement réalisé pour éviter notamment que la matière ne se resserre sur la tige d'élongation.

Avant étirage-soufflage, les préformes en matériau thermoplastique sont chauffées dans un four de conditionnement pour être portées à une température supérieure à la température de transition vitreuse du matériau thermoplastique.

Par étirage soufflage est désigné ici également un procédé dans lequel une tige d'élongation vient étirer un récipient intermédiaire. Un tel procédé est mis en oeuvre dans les machines dites à double soufflage.

### Came de commande des mouvements des organes de machine

Dans les machines de traitement de récipients, le contrôle des mouvements des organes fonctionnels de la machine est conventionnellement réalisé à l'aide d'organes roulants (typiquement des galets) sur des cames.

C'est le cas en particulier dans les machines d'étirage-soufflage pour la commande d'ouverture/fermeture de moule, pour la commande de verrouillage/déverrouillage du moule, pour la montée et descente de la tige d'élongation, pour les mouvements des bras de transfert de préformes ou de bouteilles.

C'est encore le cas dans certaines machines de remplissage pour la commande d'ouverture des têtes de remplissage associées à chaque poste de remplissage, ou pour déplacer les têtes relativement aux récipients à remplir, notamment afin de rapprocher, voire de plaquer afin d'assurer une étanchéité, ou d'écarter les récipients de l'orifice de remplissage de la vanne.

Généralement, les organes roulants sont portés par les postes de traitement, et les cames sont portées par le châssis de la machine.

La présence des tels dispositifs à organes roulants et cames permet d'assurer une parfaite répétitivité des étapes de traitement d'un poste à l'autre.

### Machines de fabrication de récipients

### Came de commande des mouvements de la tige d'élongation

Le contrôle de la vitesse d'élongation axiale est d'une grande importance pour la qualité du produit soufflé. Il convient également d'assurer la synchronisation du mouvement de la tige d'étirage avec le déclenchement du soufflage. Il est donc nécessaire de contrôler la cinématique des tiges d'élongation. Ce contrôle est délicat, en particulier pour les machines d'étirage soufflage actuelles dont les cadences sont très élevées.

Conventionnellement, la vitesse d'étirage est régulée grâce à un dispositif à galet et à came placé en partie supérieure de machine. Ce dispositif est si conventionnel qu'il n'est souvent même pas représenté (voir par exemple le document FR 2 863 929 de la Demanderesse).

Ce dispositif à galet et à came vise à synchroniser la position axiale de la tige d'étirage en fonction de la position angulaire du poste de soufflage considéré autour de l'axe de rotation du carrousel.

Le document FR 2 814 392 de la Demanderesse, illustre une configuration conventionnelle de cette commande à galet et à came.

La machine de l'art antérieur illustrée en figure 1 de ce document FR 2 814 392 est rotative : elle comporte plusieurs postes d'étirage-soufflage montés sur un carrousel. Le carrousel est entraîné en rotation de manière continue autour de son axe Al. Chaque poste d'étirage-soufflage comporte un moule de soufflage, une tuyère de soufflage, une tige d'étirage, un coulisseau, un rail et des moyens de commande des déplacements de la tige d'étirage. Les tiges sont fixées à leur extrémité supérieure sur le coulisseau qui peut coulisser verticalement sur le rail monté sur le carrousel. Chaque poste de soufflage comporte un vérin pneumatique à simple effet commandé en tout ou rien, ce vérin agissant sur le coulisseau pour le faire coulisser axialement vers le bas.

La vitesse d'étirage est contrôlée par une came de régulation qui est portée par le châssis de la machine et s'étend selon une hélice autour de l'axe A1 du carrousel: Le coulisseau comporte un galet qui, sous l'action du vérin, vient se plaquer sur ladite came. En général, il est prévu une came de sécurité qui est analogue à la came de régulation mais qui est configurée pour forcer le retour de la tige vers sa position escamotée si le galet vient à son contact. La came de sécurité permet d'être sûr que la tige est dégagée du moule lorsqu'on veut éjecter le récipient en fin de moulage si, par exemple à la suite d'un problème fluidique, le vérin de remontée de la tige ne fonctionne pas.

Le document FR 2 863 928 également au nom de la Demanderesse, illustre une autre configuration de la commande du mouvement de la tige d'étirage, par un mécanisme à galet et came de régulation. Deux cames de régulation, fixes, circulaires et superposées, définissent chacune sur leur face interne une surface de roulement pour deux galets de culbuteur. Ces surfaces de roulement sont pourvues de bosses. Le roulement des galets sur ces bosses provoque la rotation du culbuteur. Un mécanisme à compas transforme le mouvement de rotation du culbuteur en un mouvement de va et vient linéaire vertical de la tige d'étirage.

### Came de commande d'ouverture fermeture et verrouillage/ déverrouillage de moule

Le document FR 2 737 436 de la Demanderesse illustre un mode de réalisation du contrôle par came de l'ouverture et fermeture d'un moule de type portefeuille à deux demi coquilles. Un galet suiveur coopère avec une came profilée en forme de gouttière, cette came étant profilée pour déterminer quatre limites fonctionnelles successives de positionnement d'un bras d'actionnement :
- début d'ouverture de moule ;
- fin d'ouverture de moule ;
- début de fermeture de moule ;
- fin de fermeture de moule.

Ces positions successives bornent les temps suivants, caractéristiques du procédé et déterminants pour les qualités du produit obtenu : temps durant lequel un récipient achevé peut être extrait du moule, temps durant lequel une préforme peut être introduite dans le moule, temps de soufflage ou d'étirage soufflage.

Le document FR 2 653 058 de la Demanderesse illustre un mode de réalisation du contrôle par came de l'ouverture/fermeture d'un moule de type portefeuille, ainsi que du verrouillage/déverrouillage de ce moule.

### Came de commande de mouvement d'organes de transfert

Le document FR 2 479 077 décrit un agencement possible d'une pince tournante animée d'un mouvement complexe de rotation et de déplacement radial sous l'action d'une came. Cette pince saisit les préformes chaudes à la sortie du four et les amène dans le moule ouvert.

La cinématique de ces pinces de transfert dépend de la cinématique d'ouverture et fermeture des moules.

### Machines de remplissage

### Came de commande des mouvements de clapets dans les têtes de remplissage

Le contrôle de la vitesse ou de l'amplitude de déplacements de clapets ou organes équivalents dans une tête de remplissage peut être primordial pour obtenir un remplissage correct. En particulier, il est important de maîtriser le débit de remplissage : ainsi, il est connu de commencer la phase de remplissage avec un débit élevé et de l'achever avec un débit moindre pour résorber la mousse qui a pu se former pendant la phase de remplissage à débit élevé. Il convient également d'assurer la synchronisation du mouvement des clapets avec le positionnement du récipient sous l'orifice de la tête de remplissage. Il est donc nécessaire de contrôler la cinématique des clapets. Dans certains types de remplisseuses, le mouvement des clapets est asservi au déplacement d'un galet qui suit une came de guidage. Ce contrôle est délicat, en particulier pour les machines de remplissage actuelles dont les cadences sont très élevées.

### Came de commande des mouvements relatifs des récipients et des têtes de remplissage.

Le contrôle des mouvements relatifs des récipients et des têtes de remplissage peut être primordial pour obtenir un remplissage correct. Comme évoqué, il convient également d'assurer la synchronisation du mouvement des clapets avec le positionnement du récipient sous l'orifice de la tête de remplissage. Il est donc nécessaire de contrôler la cinématique relative des récipients (notamment de pinces de transfert mobiles verticalement) et des têtes (ou de certains organes mobiles des têtes), afin d'assurer un positionnement correct des récipients et des orifices de remplissage.

### Problèmes techniques identifiés par la Demanderesse

La Demanderesse a identifié le souhait, non exprimé, pour certains utilisateurs, de disposer de machines permettant la mise en oeuvre non pas d'un procédé unique et déterminé, mais de deux ou plus de deux procédés de fabrication.

Il est connu selon le document US 5 528 879 de réaliser un dispositif de commande, par organe suiveur et chemin de came, d'un élément de machine de traitement de récipients, ce dispositif comprenant deux chemins de came définis par un seul ensemble rigide, de même que des moyens permettant d'assurer un déplacement relatif entre l'organe suiveur et l'ensemble rigide, entre au moins deux positions, l'organe suiveur coopérant avec un premier chemin de came dans une première position, l'organe suiveur coopérant avec un deuxième chemin de came dans une seconde position. Toutefois, le dispositif de commande décrit dans le document US 5 528 879 ne permet pas d'obtenir deux types de commandes distinctes. Il en est de même pour les dispositifs des documents EP 0 537 023, DE 102 46 685 et DE 200 06 524.

En effet, la Demanderesse a identifié, notamment, le souhait, non exprimé, d'un petit nombre d'utilisateurs, de disposer de machines de fabrication de récipients permettant aussi bien la fabrication de récipients en PET destinés au remplissage à chaud, que de récipients en PET inaptes au remplissage à chaud.

Les récipients en PET obtenus par étirage et soufflage d'une préforme portée à température de bi orientation du PET présentent, lorsqu'ils sont portés à une température supérieure à la température de transition vitreuse Tg, un retrait important, lié à la libération des contraintes résiduelles créées dans le matériau lors de sa bi orientation (étirage longitudinal puis soufflage provoquant un étirage transversal).

Pour améliorer la stabilité thermique des bouteilles PET, un traitement thermique appelé thermofixation est conventionnellement réalisé.

Plusieurs procédés de thermofixation ont été décrits. Par exemple, les parois du moule sont portées à une température supérieure de 40°C à la température minimum d'orientation, puis le récipient, maintenu pendant plusieurs secondes sous pression contre les parois du moule, est refroidi.

Lorsqu'une machine de fabrication, par soufflage ou étirage soufflage a été étudiée et construite pour la fabrication de bouteilles PET conventionnelles, il est particulièrement fastidieux de modifier cette machine pour la rendre apte à fabriquer d'autres bouteilles, telles que par exemple bouteilles PET aptes au remplissage à chaud.

La Demanderesse a par ailleurs identifié, notamment, le souhait non exprimé d'un petit nombre d'utilisateurs de disposer de machines de remplissage permettant le remplissage de récipients de volume différents, ou de produits n'ayant pas les mêmes caractéristiques d'écoulement, ce qui nécessite d'adapter la séquence et les durées respectives des diverses étapes du remplissage.

En particulier, les cames de commandes, dédiées à une cinématique donnée des organes (moules, tige d'élongation, pinces, clapets...), cinématique spécifique du procédé, deviennent inutilisables et doivent être changées.

Ces cames de commandes, usinées au centième de millimètre doivent être placées avec grande précision sur la machine.

De sorte que les machines conventionnelles ne sont, en pratique, que très exceptionnellement modifiées.

En dépit de ce contexte défavorable, la Demanderesse s'est attachée à pallier les inconvénients mentionnés ci-dessus.

### Présentation générale de l'invention

A ces fins, l'invention se rapporte, selon un premier aspect, à un dispositif de commande, par organe suiveur et chemin de came, d'un élément de machine de traitement de récipients, ce dispositif comprenant deux chemins de came définis par un seul ensemble rigide, de même que des moyens permettant d'assurer un déplacement relatif entre l'organe suiveur et l'ensemble rigide, entre au moins deux positions, l'organe suiveur coopérant avec un premier chemin de came dans une première position, l'organe suiveur coopérant avec un deuxième chemin de came dans une seconde position, l'organe suiveur comprenant deux galets portés par un axe support commun, le premier et le second galets coopérant respectivement avec un premier et un deuxième chemins de came dans une première position de l'axe support commun par rapport à l'ensemble rigide, le premier et le second galets coopérant respectivement avec un troisième et un quatrième chemins de came dans une deuxième position de l'axe support commun par rapport à l'ensemble rigide.

Selon diverses réalisations, le dispositif présente les caractères suivants, le cas échéant combinés :
- l'ensemble rigide définissant les chemins de came est fixe, et l'axe support commun est mobile ;
- l'ensemble rigide définissant les chemins de came est mobile, et l'axe support commun est fixe ;
- l'ensemble rigide est formé par l'assemblage de tronçons portant les chemins de came pour l'organe suiveur, et de tronçons intermédiaires ;
- l'ensemble rigide présente une forme générale de gouttière, avec une paroi de fond et deux ailes, chacune des deux ailes supportant au moins un chemin de came ;
- le dispositif comprend deux ensembles rigides ayant chacun une forme de gouttière, les ouvertures de ces ensembles rigides étant en regard l'une de l'autre, le premier et le second galet coopérant chacun avec un chemin de came de chaque élément rigide, dans la première comme dans la deuxième position ;
- l'ensemble rigide présente une forme de gouttière à ouverture latérale, les galets étant montés sur un axe, de part et d'autre d'un bras, ce bras étant monté mobile entre une première position extrême, dans laquelle le bras est au plus près d'un premier bord latéral de l'ouverture de gouttière, et une deuxième position extrême, dans laquelle le bras est au plus près d'un second bord latéral de l'ouverture ;
- l'ensemble rigide présente une forme de gouttière à ouverture sensiblement perpendiculaire à l'axe de rotation des galets, l'axe support de galet étant monté amovible sur un bras support, un premier axe, court, assurant que le premier et le second galet coopèrent respectivement avec un premier et un deuxième chemin de came de l'ensemble rigide, un second axe, long, assurant que le premier et le second galet coopèrent respectivement avec un troisième et un quatrième chemin de came de l'ensemble rigide ;
- l'organe suiveur comprend deux ou plus de deux galets sensiblement identiques.

L'invention se rapporte, selon un deuxième aspect, à une machine de soufflage ou d'étirage soufflage comprenant au moins un dispositif tel que présenté ci-dessus, notamment pour la commande de mouvement de la tige d'élongation, ou la commande du verrouillage/déverrouillage de moules, ou la commande d'ouverture/fermeture de moules.

L'invention se rapporte, selon un troisième aspect, à une machine de remplissage de récipients comprenant au moins un dispositif tel que présenté ci-dessus, notamment pour la commande d'ouverture et/ou de fermeture des organes de remplissage, ou la commande des mouvements des têtes de remplissage, ou la commande des mouvements des récipients.

### Liste des figures annexées

L'invention sera mieux comprise à la lecture de la description détaillée qui suit de certains modes de réalisation actuellement préférés donnés à titre purement illustratif et nullement limitatif.

Dans cette description, on se réfère aux dessins annexés sur lesquels :
- la figure 1 est une vue en coupe transversale d'une double paire de came, selon un mode de mise en oeuvre de l'invention, un porte galets long étant représenté sur cette figure 1, les galets coopérant avec une première paire de came ;
- la figure 2 est une vue de la double paire de came représentée en figure 1, un porte galets court étant représenté sur cette figure 2, les galets coopérant avec la deuxième paire de came ;
- les figures 3 et 4 illustrent en coupe transversale un porte galets et une double paire de galets selon un deuxième mode de réalisation de l'invention ;
- les figures 5 et 6 illustrent en coupe transversale un porte galets et une double paire de galets selon un troisième mode de réalisation de l'invention.

### Description détaillée de modes de réalisation

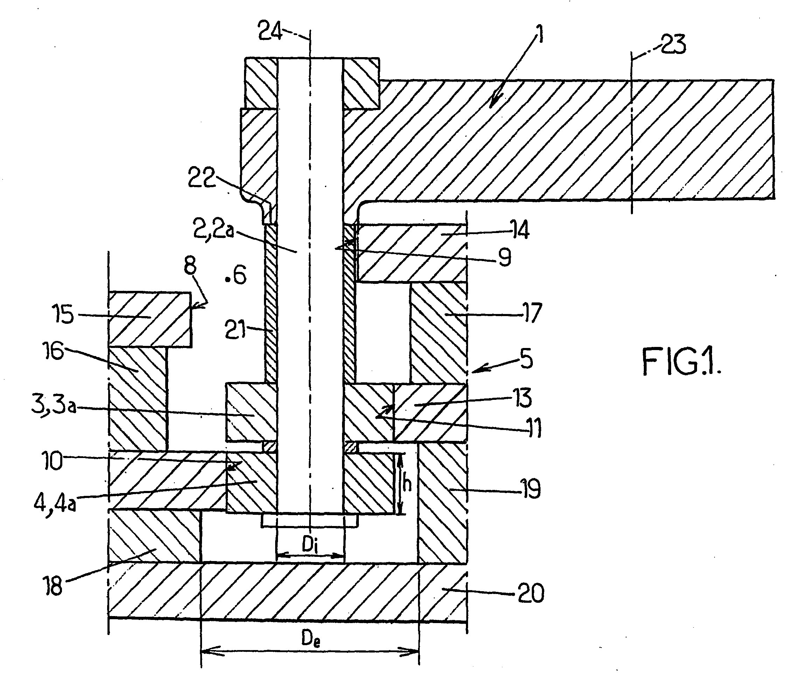

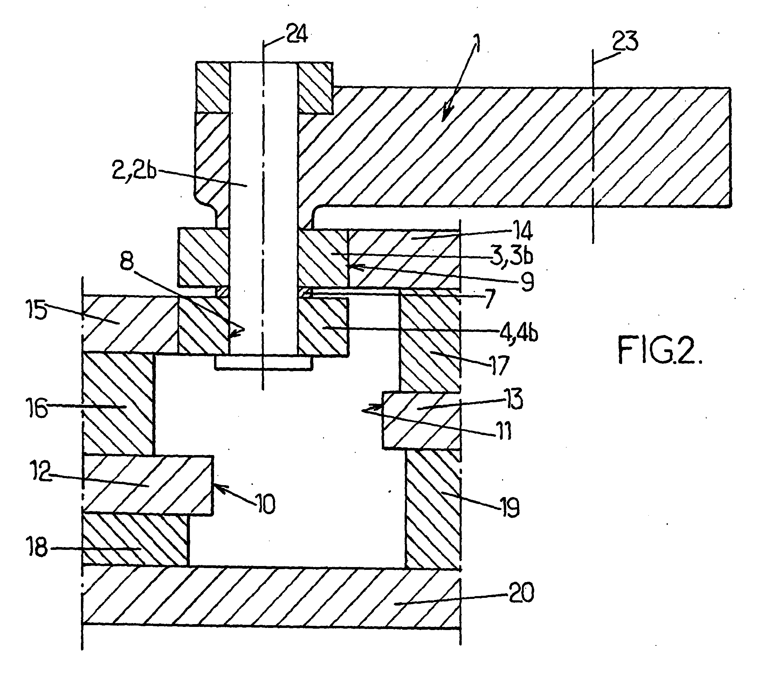

L'on se rapporte tout d'abord aux figures 1 et 2 qui illustrent un premier mode de réalisation.

Ces figures 1 et 2 illustrent un bras 1 portant à l'une de ses extrémités un axe 2 support commun sur la partie extrême duquel sont montés deux galets 3, 4 suiveurs ou galets fous.

Dans la réalisation représentée, les deux galets 3, 4 sont sensiblement identiques. Dans d'autres réalisations, non représentées, les galets 3, 4 ont des diamètres externes De différents, et/ou des hauteurs h différentes, et/ou des diamètres intérieurs Di différents.

Dans la réalisation représentée, les deux galets 3, 4 sont montés à une extrémité de l'axe 2 vers le bas des figures, un ensemble 5 définissant une double paire de cames, en forme générale de gouttière, ayant une ouverture 6 tournée vers le haut des figures 1 et 2. Il est entendu toutefois que le dispositif représenté en figures 1 et 2 pourrait être retourné, l'ouverture de l'ensemble 5 étant tournée vers le bas, l'axe 2 pénétrant de bas en haut dans cet ensemble 5.

Les deux galets 3, 4 sont distants l'un de l'autre par une entretoise ou une bague 7.

L'ensemble 5 rigide définissant la double paire de cames est rigide. Par rigide, on désigne ici le fait que la position des chemins de came 8, 9, 10, 11 dans cet ensemble 5 est prédéterminée.

Avantageusement, ainsi qu'il apparaît sur les figures, l'ensemble 5 est formé de l'assemblage de tronçons 12, 13, 14, 15 portant les chemins de came 8, 9, 10, 11 et d'autres tronçons intermédiaires 16, 17, 18, 19 et d'un tronçon de base 20, de sorte que l'ensemble présente une forme générale de gouttière, avec une paroi de fond, constituée par le tronçon de base 20, et deux ailes, chacune des deux ailes supportant au moins l'un des chemins de came (chacune des deux ailes supporte deux chemins de came dans les exemples illustrés).

Ce mode de construction offre de nombreux avantages :
- seuls les tronçons portant les chemins de came feront l'objet d'un usinage fin, par exemple au centième, les pièces à usiner étant relativement légères. En choisissant les épaisseurs des seuls tronçons intermédiaires 16, 17, 18, 19, il est possible de former divers ensembles rigides 5 ;
- le cas échéant, l'ensemble 5 pourra ne comporter que deux chemins de came et non quatre, par exemple les deux chemins de came 9, 11 de la partie droite de l'ensemble 5 ;
- lorsqu'une machine existante est pourvue d'un axe supportant des galets du type représenté en figures 1 et 2, la mise en place de l'ensemble 5 est facilitée, sans nécessairement changer les axes supports de galets existants. La réalisation de l'ensemble 5 par assemblage d'éléments permet son adaptation sur machines existantes.

Ainsi qu'il apparaît au vu des figures 1 et 2 prises ensemble, l'axe 2 support commun de galets 3, 4 peut occuper deux positions extrêmes déterminée. Dans une première position (figure 1), un premier axe 2a est d'une longueur telle que les galets 3a, 4a coopèrent avec les deux chemins de came 10, 11 inférieurs. Dans une seconde position, un deuxième axe 2b, différent du premier axe 2a, est d'une longueur telle que les galets 3b, 4b coopèrent avec les deux chemins de came 8, 9 supérieurs. Dans la réalisation représentée, les galets 3a, 4a, portés par le premier axe 2a sont sensiblement identiques aux galets 3b, 4b portés par le deuxième axe 2b. Dans d'autres modes de réalisation, non représentés, les galets 3b, 4b portés par le deuxième axe 2b ont des diamètres externes De différents, et/ou des hauteurs h différentes, et/ou des diamètres intérieurs Di différents de ceux des galets 3a, 4a portés par le premier axe 2a.

Une entretoise 21 est montée sur l'axe long 2a, entre le galet supérieur 3a et une butée annulaire 22. Cette entretoise 21 est placée à un jeu minimum du chemin de came qui lui est le plus proche. A titre indicatif ce jeu est de l'ordre du millimètre.

Dans le mode de réalisation représenté, le bras 1 est monté en rotation autour d'un axe 23, sensiblement parallèle à l'axe de rotation 24 des galets. Cet axe de rotation 23 est à distance fixe de l'axe de rotation 24 des galets.

La mise en place de l'ensemble 5 sur la machine s'effectue avec le soin habituel à la fixation d'un chemin de came sur une machine (par exemple repérage au comparateur, piontage). L'ensemble une fois placé sur la machine, il suffit de changer les axes supports de galets lors de la modification du procédé, l'axe court 2b qui suit les chemins de came 8, 9 correspondant à un premier procédé, l'axe long 2b qui suit les chemins de came 10, 11 correspondant à un deuxième procédé indépendant du premier. Le changement d'axe porte galets ne nécessite pas de réglage particulier et peut être effectué rapidement par un personnel relativement peu formé.

Il convient d'ailleurs de noter qu'au lieu d'utiliser des axes 2a, 2b de longueurs différentes, un seul axe long pourrait être présent sur chaque poste, lequel axe pourrait occuper deux positions fixes différentes, l'une correspondant à celle de la figure 1, l'autre à celle de la figure 2.

Cet axe mobile, à deux positions, haute et basse, monté sur un bras fixe permet ainsi de changer le chemin de came servant aux galets, sur l'ensemble 5 fixe.

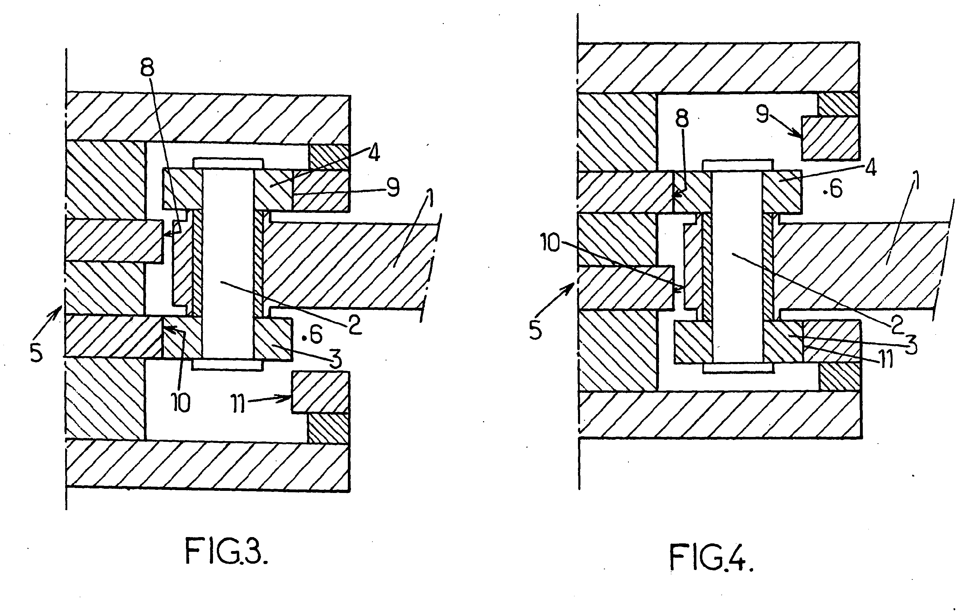

L'on se reporte maintenant aux figures 3 et 4 qui illustrent un deuxième mode de réalisation.

Dans ce deuxième mode, l'ensemble rigide 5 est également formé par assemblage d'éléments dont seuls certains définissent les chemins de came. Les avantages de cette construction, exposés en référence au mode de réalisation des figures 1 et 2, sont encore valables et ne sont donc pas redits.

Dans ce mode de réalisation, l'ensemble 5 forme une gouttière à ouverture 6 latérale, dans laquelle pénètre le bras 1 portant l'axe 2 supportant les galets 3, 4. Tout comme dans le mode de réalisation des figures 1 et 2, les deux galets peuvent être identiques ou non.

L'axe 2 peut occuper deux positions extrêmes prédéterminées. Dans une mise en oeuvre, l'axe 2 est mobile et l'ensemble 5 est fixe.

Dans une autre mise en oeuvre, l'axe 2 est fixe et l'ensemble 5 est mobile. Le déplacement relatif de l'axe 2 et de l'ensemble 5 s'effectue entre deux positions par déplacement haut/bas. L'expression «haut/bas» est ici employée en référence à l'orientation donnée en figures 3 et 4 et ne doit pas être vue comme limitative. Dans la première position « haute » (figure 3), un premier galet 3 coopère avec un premier chemin de came 10. Dans la seconde position « basse » (figure 4), ce premier galet 3 coopère avec un deuxième chemin de came 11. Le dispositif pourrait, dans une réalisation, ne comporter que ce premier galet 3 porté par l'axe 2 et coopérant avec l'un ou l'autre des chemins de came 10, 11. Dans le mode de réalisation représenté, toutefois, l'axe 2 porte un second galet 4. Dans la première position « haute », ce second galet 4 coopère avec un troisième chemin de came 9. Dans la seconde position « basse », ce second galet 4 coopère avec un quatrième chemin de came 8.

La mise en place de l'ensemble 5 sur la machine s'effectue avec le soin habituel à la fixation d'un chemin de came sur une machine (par exemple repérage au comparateur, piontage). L'ensemble une fois placé sur la machine, il suffit d'effectuer un déplacement relatif entre les axes porte galets et l'ensemble 5 lors de la modification du procédé, l'axe suivant les chemins de came 9, 10 correspondant à un premier procédé, ou bien suivant les chemins de came 8, 11 correspondant à un deuxième procédé indépendant du premier. Ce déplacement relatif ne nécessite pas de réglage particulier et peut être effectué rapidement par un personnel relativement peu formé, ou être commandé par l'opérateur.

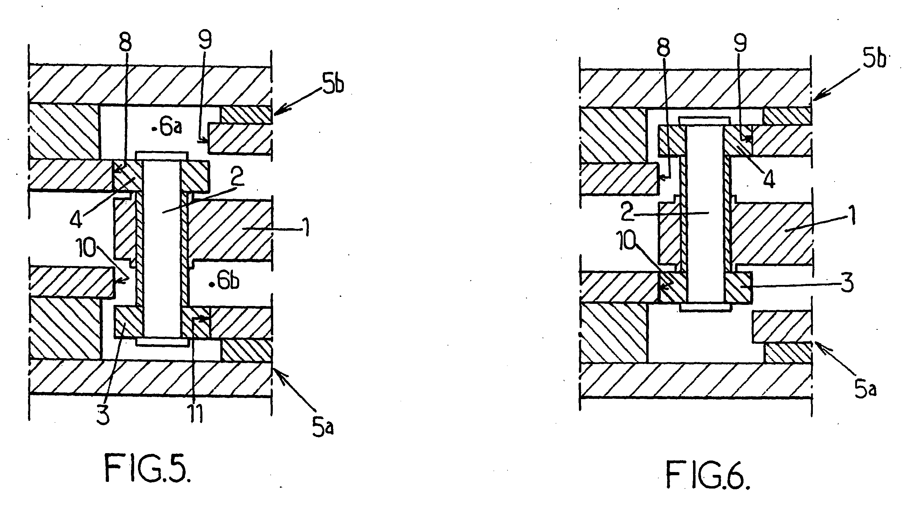

L'on se reporte maintenant aux figures 5 et 6 qui illustrent un troisième mode de réalisation.

Dans ce troisième mode, deux ensembles 5a, 5b rigides sont chacun également formés par assemblage d'éléments dont seuls certains définissent les chemins de came. Les avantages de cette construction, exposés en référence au mode de réalisation des figures 1 et 2, sont encore valables et ne sont donc pas redits.

Dans ce mode de réalisation, chaque ensemble 5a, 5b forme une gouttière à ouvertures 6a, 6b se faisant face l'une l'autre.

Dans chacune de ces ouvertures 6a, 6b pénètre une partie extrême d'un bras 1 portant l'axe 2 supportant les galets 3, 4. Tout comme dans le mode de réalisation des figures 1 et 2, les deux galets peuvent être identiques ou non.

Dans une mise en oeuvre, l'axe 2 est mobile et les ensembles 5a, 5b sont fixes.

Dans une autre mise en oeuvre, l'axe 2 est fixe et les ensembles 5a, 5b sont mobiles. Par déplacement relatif de l'axe 2 et des ensembles 5a, 5b, l'axe 2 peut occuper deux positions extrêmes prédéterminées, entre ces deux positions par déplacement haut/bas. L'expression « haut/bas » est ici employée en référence à l'orientation donnée en figures 5 et 6 et ne doit pas être vue comme limitative. Dans la première position « haute » (figure 6), un premier galet 3 coopère avec un premier chemin de came 10. Dans la seconde position « basse » (figure 5), ce premier galet 3 coopère avec un deuxième chemin de came 11.

Le dispositif pourrait, dans une réalisation, ne comporter que ce premier galet 3 porté par l'axe 2 et coopérant avec l'un ou l'autre des chemins de came 10, 11, seul l'ensemble 5a portant ces deux chemins de came étant présent. Dans le mode de réalisation représenté, toutefois, l'axe 2 porte un second galet 4. Dans la première position « haute » (figure 6), ce second galet 4 coopère avec un troisième chemin de came 9. Dans la seconde position « basse » (figure 5), ce second galet 4 coopère avec un quatrième chemin de came 8.

La mise en place des ensembles 5a, 5b sur la machine s'effectue avec le soin habituel à la fixation d'un chemin de came sur une machine (par exemple repérage au comparateur, piontage). Les ensembles une fois placés sur la machine, il suffit d'effectuer un déplacement relatif des axes 2 porte galets et des sous ensembles 5a, 5b lors de la modification du procédé, l'axe 2 suivant les chemins de came 9, 10 correspondant à un premier procédé, ou bien suivant les chemins de came 8, 11 correspondant à un deuxième procédé indépendant du premier. Ce déplacement relatif ne nécessite pas de réglage particulier et peut être effectué rapidement par un personnel relativement peu formé, ou être commandé par l'opérateur.

Les dispositions qui viennent d'être décrites en référence aux figures annexées trouvent des applications avantageuses dans la commande d'ouverture/fermeture de moules, dans la commande de mouvement de tige d'élongation, dans la commande de verrouillage/déverrouillage de moules pour des machines de soufflage et d'étirage soufflage de type carrousel.

Elles trouvent également des applications avantageuses dans la commande de déplacement de clapets notamment pour l'ouverture et/ou la fermeture des têtes de remplissage, ou la commande des mouvements verticaux des têtes de remplissage, ou la commande des mouvements verticaux des récipients pour des machines de remplissage de type carrousel.

## Revendications

1. Dispositif de commande, par organe suiveur et chemin de came, d'un élément de machine de traitement de récipients, comprenant deux chemins de came définis par un seul ensemble (5) rigide, des moyens permettant d'assurer un déplacement relatif entre l'organe suiveur et l'ensemble (5) rigide, entre au moins deux positions, l'organe suiveur coopérant avec un premier chemin de came dans une première position, l'organe suiveur coopérant avec un deuxième chemin de came dans une seconde position, **caractérisé en ce que** l'organe suiveur comprend deux galets (3, 4) portés par un axe (2) support commun, le premier et le second galets (3, 4) coopérant respectivement avec un premier et un deuxième chemins de came dans une première position de l'axe (2) support commun par rapport à l'ensemble rigide, le premier et le second galets (3, 4) coopérant respectivement avec un troisième et un quatrième chemins de came dans une deuxième position de l'axe par rapport à l'ensemble (5) rigide.

2. Dispositif selon la revendication 1, **caractérisé en ce que** l'ensemble (5) rigide définissant les chemins de came est fixe et l'axe (2) support commun est mobile.

3. Dispositif selon la revendication 1, **caractérisé en ce que** l'ensemble (5) rigide définissant les chemins de came est mobile et l'axe (2) support commun est fixe.

4. Dispositif selon l'une quelconque des revendications 1 à 3, **caractérisé en ce que** l'ensemble (5) rigide est formé par l'assemblage de tronçons (12-15) portant les chemins de came pour l'organe suiveur, et de tronçons intermédiaires (16-19).

5. Dispositif selon l'une quelconque des revendications précédentes, **caractérisé en ce que** l'ensemble (5) rigide présente une forme générale de gouttière, avec une paroi de fond et deux ailes, chacune des deux ailes supportant au moins un chemin de came.

6. Dispositif selon l'une quelconque des revendications 1 à 5, **caractérisé en ce qu'**il comprend deux ensembles (5a, 5b) rigides ayant chacun une forme de gouttière, les ouvertures (6a, 6b) de ces ensembles rigides étant en regard l'une de l'autre, le premier et le second galet coopérant chacun avec un chemin de came de chaque élément rigide, dans la première comme dans la deuxième position.

7. Dispositif selon l'une quelconque des revendications 1 à 5, **caractérisé en ce que** l'ensemble rigide (5) présente une forme de gouttière à ouverture latérale, les galets étant montés sur un axe, de part et d'autre d'un bras (1), ce bras (1) étant monté mobile entre une première position extrême, dans laquelle le bras (1) est au plus près d'un premier bord latéral de l'ouverture de gouttière, et une deuxième position extrême, dans laquelle le bras est au plus près d'un second bord latéral de l'ouverture.

8. Dispositif selon l'une quelconque des revendications 1 à 5, **caractérisé en ce que** l'ensemble (5) rigide présente une forme de gouttière à ouverture (6) sensiblement perpendiculaire à l'axe de rotation des galets, l'axe (2) support de galet (3, 4) étant monté amovible sur un bras (1) support, un premier axe (2b), court, assurant que le premier et le second galet coopèrent respectivement avec un premier et un deuxième chemin de came de l'ensemble rigide, un second axe (2a), long, assurant que le premier et le second galet coopèrent respectivement avec un troisième et un quatrième chemin de came de l'ensemble rigide.

9. Dispositif selon l'une quelconque des revendications précédentes, **caractérisé en ce que** l'organe suiveur comprend deux ou plus de deux galets sensiblement identiques.

10. Machine de soufflage ou d'étirage soufflage de récipients en matériau thermoplastique comprenant au moins un dispositif tel que présenté dans l'une quelconque des revendications précédentes, notamment pour la commande de mouvement des tiges d'élongation, ou la commande du verrouillage/déverrouillage des moules, ou la commande d'ouverture/fermeture des moules.

11. Machine de remplissage de récipients comprenant au moins un dispositif tel que présenté dans l'une quelconque des revendications 1 à 9, notamment pour la commande d'ouverture et/ou de fermeture des organes de remplissage, ou la commande des mouvements des têtes de remplissage, ou la commande des mouvements des récipients.

## Claims

1. A control device, with a follower member and a cam path, to control an element of a container processing machine, comprising two cam paths defined by a single rigid assembly (5), means enabling a relative displacement between the follower member and the rigid assembly (5), between at least two positions, the follower member engaging a first cam path in a first position, the follower member engaging a second cam path in a second position, **characterized in that** the follower member comprises two rollers (3, 4) carried by a common support shaft (2), the first and second rollers (3, 4) engaging respectively with first and second cam paths in a first position of the common support shaft (2) relative to the rigid assembly, the first and second rollers (3, 4) engaging respectively with third and fourth cam paths in a second position of the shaft relative to the rigid assembly (5).

2. A device according to claim 1, **characterized in that** the rigid assembly (5) defining the cam paths is stationary and the common support shaft (2) is movable.

3. A device according to claim 1, **characterized in that** the rigid assembly (5) defining the cam paths is movable and the common support shaft (2) is stationary.

4. A device according to any one of claims 1 to 3, **characterized in that** the rigid assembly (5) is formed by assembling together segments (12-15) carrying the cam paths for the follower member, and intermediate segments (16-19).

5. A device according to any one of preceding claim, **characterized in that** the rigid assembly (5) has a general gutter shape, with a bottom wall and two flanges, each of the two flanges supporting at least one cam path.

6. A device according to any one of claims 1 to 5, **characterized in that** it comprises two rigid assemblies (5a, 5b), each having a gutter shape, the openings (6a, 6b) of these two rigid assemblies facing each other, each of the first and second rollers engaging a cam path of each rigid element, both in the first position and in the second position.

7. A device according to any one of claims 1 to 5, **characterized in that** the rigid assembly (5) has a gutter shape with a lateral opening, the rollers being mounted on a shaft on either side of an arm (1), said arm (1) being mounted to move between a first extreme position in which the arm (1) is closer to a first side edge of the opening of the gutter, and a second extreme position in which the arm is closer to a second side edge of the opening.

8. A device according to any one of claims 1 to 5, **characterized in that** the rigid assembly (5) has a gutter shape having an opening (6) substantially perpendicular to the axis of rotation of the rollers, the roller supporting shaft (2) being removably mounted on a support arm (1), a short first shaft (2b) ensuring that the first and second rollers engage respectively first and second cam paths of the rigid assembly, a long second shaft (2b) ensuring that the first and second rollers engage respectively third and fourth cam paths of the rigid assembly.

9. A device according to any one of preceding claim, **characterized in that** the follower member has two or more than two substantially identical rollers.

10. A blow-molding or stretch blow-molding machine for blow-molding or stretch blow-molding thermoplastic containers including at least one device as set out in any one of preceding claim, in particular for controlling the movement of stretch rods, or for controlling the locking/unlocking of the molds, or for controlling the opening/closing of the molds.

11. A machine for filling containers including at least one device as set out in any one of claims 1 to 9, in particular for controlling the opening and/or closing of filling members, or for controlling movements of filling heads, or for controlling movements of containers.

## Patentansprüche

1. Steuerungsvorrichtung durch Einsatz eines Folgeglieds und eines Nockenwegs für ein Maschinenelement zur Bearbeitung von Behältern, das zwei Nockenwege umfasst, die durch einen einzelnen starren Bausatz (5) ausgebildet werden, wobei Mittel die Gewährleistung einer relativen Bewegung zwischen dem Folgeglied und dem festen Bausatz (5) zwischen zumindest zwei Positionen ermöglichen, wobei das Folgeglied in einer ersten Position mit einem ersten Nockenweg wirkt, das Folgeglied in einer zweiten Position mit einem zweiten Nockenweg wirkt, **dadurch gekennzeichnet, dass** das Folgeglied zwei Rollen (3, 4) umfasst, die von einer gemeinsamen Trägerachse (2) getragen werden, wobei die erste und die zweite Rolle (3, 4) jeweils mit einem ersten und einem zweiten Nockenweg in einer ersten Position der gemeinsamen Trägerachse (2) in Bezug auf den starren Bausatz wirken und die erste und die zweite Rolle (3, 4) jeweils mit einem dritten und einem vierten Nockenweg in einer zweiten Position der Achse in Bezug zum starren Bausatz (5) wirken.

2. Vorrichtung nach Anspruch 1, **dadurch gekennzeichnet, dass** der starre Bausatz (5), der die Nockenwege ausbildet, fest und die gemeinsame Trägerachse (2) mobil ist.

3. Vorrichtung nach Anspruch 1, **dadurch gekennzeichnet, dass** der starre Bausatz (5) zur Ausbildung der Nockenwege mobil und die gemeinsame Trägerachse (2) fest ist.

4. Vorrichtung nach einem der Ansprüche 1 bis 3, **dadurch gekennzeichnet, dass** der starre Bausatz (5) aus der Verbindung von Abschnitten (12-15), die die Nockenwege für das Folgeglied aufnehmen, und aus Zwischenabschnitten (16-19) ausgebildet ist.

5. Vorrichtung nach einem der vorstehenden Ansprüche, **dadurch gekennzeichnet, dass** der starre Bausatz (5) eine allgemeine Rinnenform mit einer Bodenwand und zwei Flügeln aufweist, wobei die beiden Flügel jeweils zumindest einen Nockenweg aufnehmen.

6. Vorrichtung nach einem der Ansprüche 1 bis 5, **dadurch gekennzeichnet, dass** sie zwei starre Bausätze (5a, 5b) umfasst, die jeweils eine Rinnenform aufweisen, wobei die Öffnungen (6a, 6b) dieser starren Bausätze zueinander gerichtet sind und die erste und die zweite Rolle jeweils mit einem Nockenweg jedes starren Elements in der ersten und in der zweiten Position wirkt.

7. Vorrichtung nach einem der Ansprüche 1 bis 5, **dadurch gekennzeichnet, dass** der starre Bausatz (5) eine Rinnenform mit Seitenöffnung aufweist, wobei die Rollen auf eine Achse beidseitig von einem Arm (1) montiert sind, wobei dieser Arm mobil zwischen einer ersten Endstellung, in der sich der Arm (1) möglichst nah an einem ersten Seitenrand der Rinnenöffnung befindet, und einer zweiten Endstellung, in der sich der Arm möglichst nah an einem zweiten Seitenrand der Öffnung befindet, montiert ist.

8. Vorrichtung nach einem der Ansprüche 1 bis 5, **dadurch gekennzeichnet, dass** der starre Bausatz (5) eine Rinnenform mit einer nahezu rechtwinkeligen Öffnung (6) zur Drehachse der Rollen aufweist, wobei die Rollenträgerachse (2, 3, 4) beweglich auf einem Trägerarm (1) montiert ist, wobei eine erste kurze Achse (2b) gewährleistet, dass die erste und die zweite Rolle jeweils mit einem ersten und einem zweiten Nockenweg des starren Bausatzes wirkt und eine zweite lange Achse gewährleistet, dass die erste und die zweite Rolle jeweils mit einem dritten und einem vierten Nockenweg des starren Bausatzes wirkt.

9. Vorrichtung nach einem der vorstehenden Ansprüche, **dadurch gekennzeichnet, dass** das erste Folgeglied zwei oder mehr als zwei nahezu identische Rollen umfasst.

10. Gebläse- und Streckgebläsemaschine, um thermoplastischen Behälter zu blasen oder strecken-blasen, die zumindest eine Vorrichtung nach einem der vorstehenden Ansprüche, insbesondere für die Bewegungssteuerung der Dehnungsstangen oder die Verriegelungs- und Entriegelungssteuerung der Formen oder die Öffnungs-/Schließsteuerung der Formen umfasst.

11. Behälterfüllmaschine, die zumindest eine Vorrichtung nach einem der Ansprüche 1 bis 9, insbesondere für die Öffnungs- und/oder Schließsteuerung der Füllglieder oder die Steuerung der Bewegungen der Füllköpfe oder die Steuerung der Bewegungen der Behälter umfasst.
